# EUROPEAN PATENT APPLICATION

(11) **EP 2 278 201 A1**
(43) Date of publication of application: **26.01.2011**
(21) Application number: 10183295.4
(22) Date of filing: 23.08.2002
(51) Int. Cl.: F16K 29/00, B25B 27/24

(54) **Freeing of seized valves**

(30) Priority: 23.08.2001 GB 0120496
(62) Divisional of application: 02755250.4
(71) Applicant: Enston, Robert Peter, Conway, North Wales LL32 8ZR (GB)
(72) Inventor: Enston, Robert Peter, Conway, North Wales LL32 8ZR (GB)
(74) Representative: W.P. Thompson & Co.

(57) **Abstract**

An apparatus for freeing a seized valve having an elongate valve actuating stem (10) projecting out of the valve comprises means for repeatedly applying an impact force to the valve actuating stem along its longitudinal axis. The impact force may be applied alternately in opposite directions along the longitudinal axis and the apparatus may comprise gripping means for gripping and engaging with a projecting portion of the valve actuating stem. The repeated application of the impact force to the valve actuating stem along its longitudinal axis induces vibration and causes movement of those portions of the valve causing seizure. This helps to dislodge scale and other deposits and enables the valve to be moved.

## Description

The present invention relates to the freeing of seized valves and in particular to the freeing of seized valves which are opened and closed by rotating a valve actuating stem projecting out of a valve housing.

Flow control valves of all types (e. g. for controlling the flow of water, gas, oil etc.) are frequently left completely undisturbed in the same position for extended periods of time, sometimes as long as tens of years. The valves may remain in a fully closed or fully open position or in an intermediate position between the two extremes.

When such valves are not regularly actuated it is common for scale to be deposited on the internal components of the valve, particularly on the valve actuating stem which must be rotated in order to change the degree of opening of the valve. The build up of scale can be so severe that it becomes impossible to actuate the valve, particularly if the valve has not been used for many years.

It is an object of the present invention to provide a method and apparatus which enable such seized valves to be freed.

In accordance with a first aspect of the present invention, there is provided an apparatus for freeing a seized valve having an elongate valve actuating stem projecting out of the valve, comprising gripping means for gripping and engaging with a projecting portion of the valve actuating stem and means enabling the gripping means, when gripping the valve actuating stem, to be subjected to impact forces in a rotational direction relative to the longitudinal direction of the valve stem.

Preferably, the apparatus further comprises means for repeatedly applying an impact force to the valve actuating stem along its longitudinal axis.

Preferably, the apparatus further comprises means for repeatedly applying an impact force to the valve actuating stem along its longitudinal axis.

Preferably, the apparatus comprises means for applying the impact force to the valve actuating stem alternately in opposite directions along its longitudinal axis.

The gripping means may comprise a plurality of jaws.

In accordance with a second aspect of the present invention, there is provided a method of freeing a seized valve having a elongate valve actuating stem projecting out of the valve, comprising gripping and engaging a projecting portion of the valve actuating stem and subjecting the gripping means, when gripping the valve actuating stem, to impact forces in a rotational direction relative to the longitudinal direction of the valve stem.

By way of example only, specific embodiments of the present invention will now be described, with reference to the accompanying drawings, in which:-
Fig. 1 is a plan view of the uppermost portion of a typical valve stem;
Fig. 2 is a side view of a first embodiment of valve freeing device in accordance with the present invention;
Fig. 3 is a side view of a second embodiment of valve freeing mechanism in accordance with the present invention, shown in position on a valve stem;
Fig. 4 is a side view of the mechanism of Fig. 3;
Fig. 5 is an inverted plan view of the mechanism of Fig. 3; looking in the direction of arrow VI-VI in Fig. 4;
Fig. 6 is a plan view of a third embodiment of valve freeing mechanism in accordance with the present invention;
Fig. 7 is a plan view of the top of a valve stem used in conjunction with the mechanism of Fig. 6;
Fig. 8 is a side view of a portion of fourth embodiment of valve freeing mechanism in accordance with the present invention;
Fig. 9 is a plan view of the portion of the valve freeing mechanism of Fig. 8; Fig. 10 is a side view of the completed fourth embodiment of valve freeing mechanism in accordance with the present invention;
Fig. 11 is a diagrammatic, partly perspective view of a fifth embodiment of a valve freeing mechanism in accordance with the present invention;
Fig. 12 is a diagrammatic longitudinal sectional view of the fifth embodiment; and
Fig. 13 is a diagrammatic transverse sectional view of a bidirectional torque transfer arrangement of the fifth embodiment.

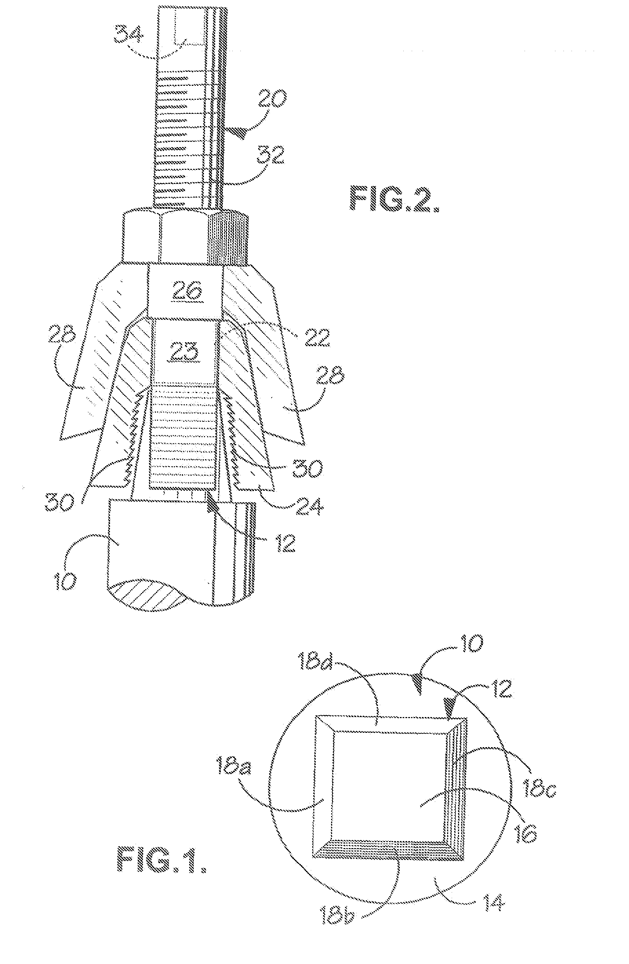

Referring firstly to Figs. 1 and 2, the uppermost portion of a typical valve stem 10 comprises a boss 12 projecting from an upper planar face 14 of the valve stem. The boss 12 is in the form of a truncated pyramid having an upper planar square face 16 extending parallel to the upper face 14 of the stem 10 and having four identical inclined side faces 18a, 18b 18c 18d. Conventionally, in order to rotate the valve stem, a key which is complementarily-shaped to the boss 12 is placed over and in contact with the boss and is rotated manually be means of a handle.

With reference to Fig. 2, the first embodiment of valve freeing apparatus in accordance with the present invention comprises a central cylindrical shank 20 which is formed into an impact head 22. The lower end of the impact head 22 carries a first collar 23 and two pairs of opposed gripping fingers 24 project downwardly from the collar. The collar 23 and fingers 24 are made from slightly resilient metal so that they can flex slightly, as will be explained.

The shank 20 also carries a further collar 26 which in turn carries four downwardly depending fingers 28, each finger 28 adapted to engage the outer face of a respective one of the fingers 24 of the collar 23. The outer face of each of the fingers 24 is planar and slopes downwardly such that movement of the collar 26 towards the collar 23 causes the fingers 24 of the first collar 23 to flex inwardly.

The inner face of each of the fingers 24 is provided with a plurality of transversely extending upwardly directed teeth or barbs 30 which, as will be explained, are adapted to engage the outer faces 18a to 18d of the boss 12 of the valve stem.

The opposite end of the shank 20 is threaded externally at 32 for connection to a device (e.g. a pneumatic or electrical power tool) for transmitting angular torque to the shank in a known manner. The uppermost end of the shank 20 is also provided with a threaded recess 34 for receipt of the nose of a vibration device (not illustrated) for applying longitudinal vibration to the shank 20.

In use, the apparatus is positioned over the free end of a valve stem 10 such that each the teeth 30 of each of the fingers 24 of the collar 22 lie in contact with a respective one of the inclined faces 18a to 18d of the valve stem boss 12. The torque-applying device is then attached to the shank 20 as is the vibration device. Normally, the vibration device will be activated first of all, which will cause the shank 20 to vibrate in the longitudinal direction such that it moves to and fro along its longitudinal axis. As the shank 20 moves downwardly, the impact head 22 contacts the upper face 16 of the valve stem boss 12. At the same time, the collar 26 moves downwardly with respect to the collar 23, causing the fingers 28 of the collar 26 to move relative to the fingers 24 of the collar 23, thereby displacing the fingers 24 inwardly, causing the elongate teeth 30 to bite into and engage with the outer faces 18a to 18d of the valve stem boss 12. Thus, as the shank 20 moves upwardly, the valve stem boss 12 and the valve stem 10 are also pulled upwardly.

The rapid upward and downward movement of the valve stem 10 along its longitudinal axis causes deposits, such as scale, on the valve stem to be dislodged, thereby allowing the valve stem to be rotated by means of the pneumatic or other power tool. The vibration may continue as the torque applying device rotates the shank 20 or may cease prior to rotation of the shank 20.

The vibration device might typically comprise a powered hammer arrangement whose output is connected via a spring (e.g. a metal, hydraulic or pneumatic spring) to the apparatus. The powered hammer will provide the impact in the downward direction, whereas the spring will provide the impact in the opposite direction. However, other types of vibration device could be used.

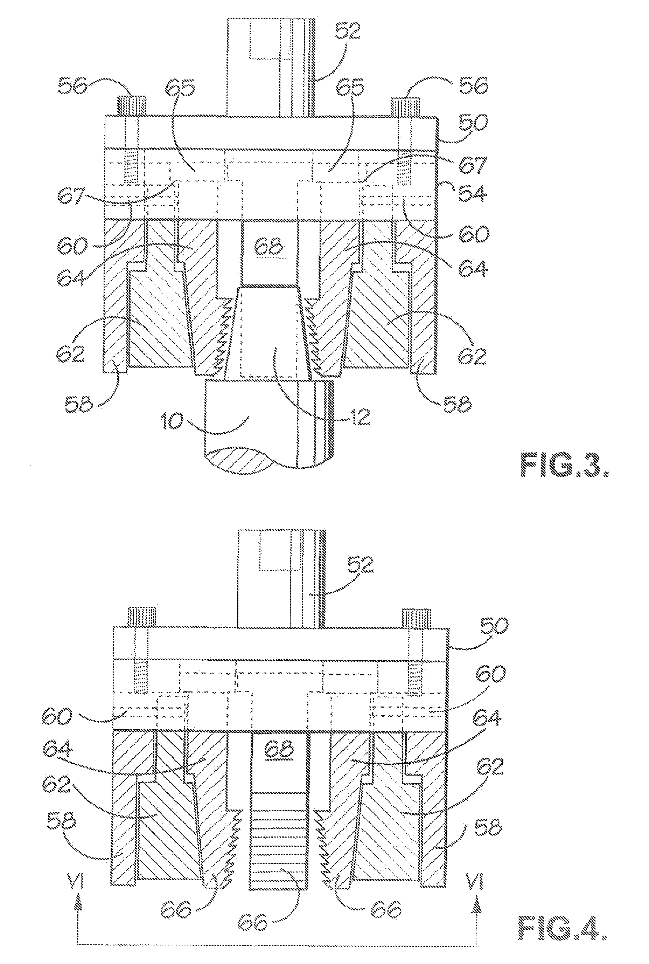

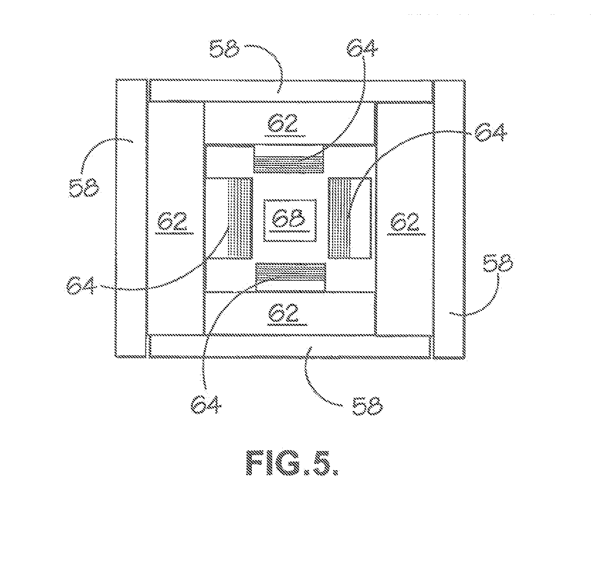

The embodiment illustrated in Figs. 3 to 5 comprises a planar drive plate 50 from which a cylindrical attachment boss 52 projects perpendicularly from one face. A guide plate 54 is secured to the undersurface of the drive plate by means of four cap screws 56 and two pairs of opposed retainer plates 58 are secured to the guide plate by means of a respective securing pin 60. Each pin 60 also retains a tapered wedge member 62 which is constrained to move vertically by sliding engagement with its associated retainer plate 58.

The guide plate 50 also receives and retains two opposed pairs of jaws 64, the inner face of each jaw being inclined to correspond to the inclination of the faces of the valve stem boss and comprising laterally extending teeth 66, corresponding to the teeth 30 in the first embodiment. The jaws 64 are permitted a small degree of vertical movement, being limited in the downward direction by engagement of an enlarged head 65 against a shoulder 67 in the guide plate and being limited in the upward direction by abutment of the head 65 against the underside of the drive plate 50. The guide plate also receives and retains an impact head 68.

In use, and as illustrated in Fig. 3, the apparatus is placed over a valve stem boss such that the teeth 66 of the inner face of each jaw 64 lie in contact with a respective one of the inclined faces 18a to 18d of the valve stem boss 12. A vibration and torque inducing device is then attached to the boss 52 of the drive plate 50 and the vibration means is actuated, causing the drive plate, guide plate and tapered wedges also to vibrate.

As the drive plate moves downwardly, the impact head 68 engages the upper planar face 16 of the valve stem boss 12. The downward movement of the drive plate also causes the tapered wedges to move downwardly with respect to the jaws, causing the jaws to deflect inwardly and causing the teeth of the jaws to engage the outer faces of the valve stem boss. As the drive plate moves upwardly, the engagement of the teeth of the jaws with the valve stem boss causes the valve stem boss 12 and the valve stem 10 to be moved upwardly, and the upward and downward motion of the valve stem continues as long as the vibration inducing apparatus is actuated. This causes any scale or other deposits on the valve stem to be loosened, thereby facilitating its rotation. The valve stem may then be rotated by actuating the torque-inducing apparatus, either during or after vibration. The vibration device may conveniently be the same as that used for the first embodiment.

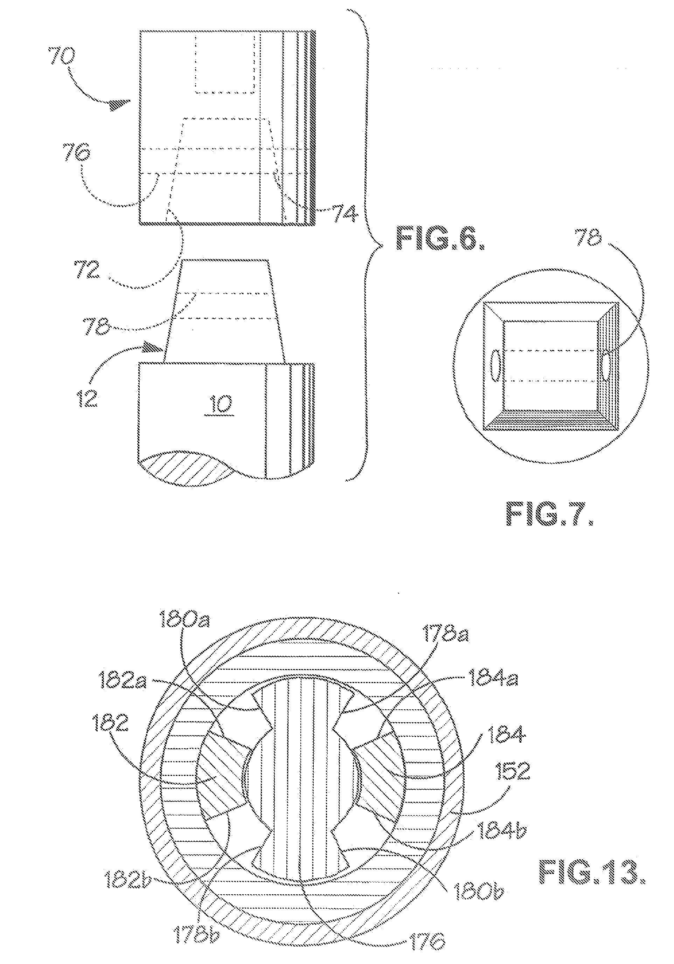

The embodiment of Fig.6 and 7 comprises a cuboidal cap 70 having a recess 72 in its lower end which is shaped to receive the projecting boss of the valve stem 10 with each wall of the recess 72 engaging a corresponding one of the inclined faces of the boss 12 of the valve stem 10. It will also be observed that two aligned apertures 74, 76 are provided in two opposed walls of the recess 72. When the cap 70 is placed in position on the boss 12 of the valve stem 10, the apertures 74, 76 are aligned with an aperture 78 drilled horizontally through the boss 12 of the valve stem 10 from one face to another. This allows a securing bolt to be passed through the apertures 74, 78, 76 which effectively secures the cap 70 and the valve stem 10 together.

The upper end of the cap 70 is also provided with a recess for receipt of apparatus for applying a torque and longitudinal vibration to the cap 70, as for the previous embodiment. As for the other embodiment, the cap 70 is first of all vibrated to dislodge scale and other deposits from the valve stem 10 and then the torque applying apparatus is actuated to rotate the valve stem. The vibration device may conveniently be the same as that used for the first embodiment.

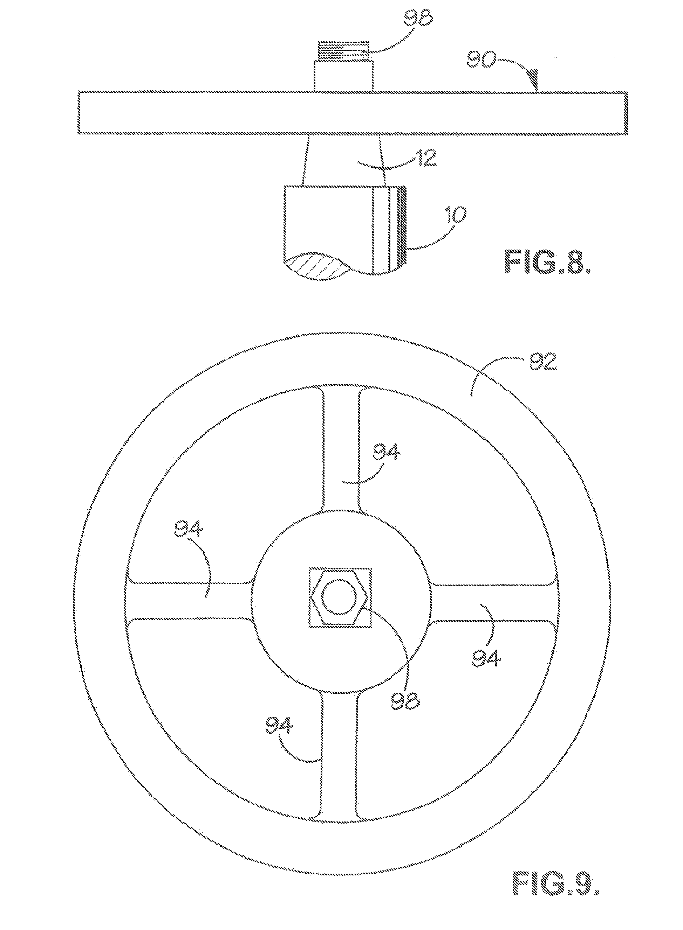

Figs. 8 to 10 illustrate a wheel handle 90 which is secured to the boss 12 of a valve stem 10. The wheel 90 comprises an outer annulus 92 and four spokes 94 arranged at right angles to one another and connected to the boss 12, secured by a nut 98.

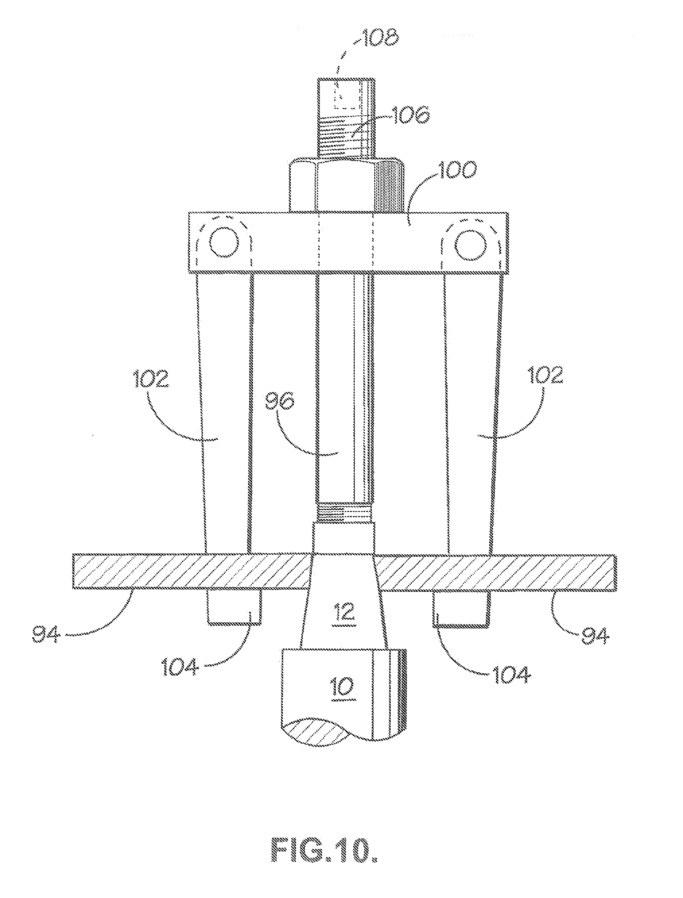

As shown in Fig. 10, the apparatus for freeing the valve comprises a cylindrical shank 96, one end of which engages the upper end of the nut 98 retaining the wheel 90 in position on the boss 12. Towards the opposite end of the shank 96 a transversely extending cross-piece 100 is provided. Two securing arms 102 are pivotally mounted to the cross-piece 100, one at each end of the cross-piece, the lower ends of the arms 102 being formed into hooks 104 which are arranged to hook under a respective one of two opposed spokes 94. The upper end of the shank 96 is also provided with external threading 106 and a recess 108 for attachment of a torque-inducing device and a vibration device respectively, as for the previous embodiments.

As for the previous embodiments, the vibration-inducing device (which conveniently may be the same as for the previous embodiments) is firstly actuated. During downward motion of the shank 96, the engagement of the shank 96 with the lug 12 causes the valve stem to move downwardly. Upon movement in the opposite direction, the engagement of the hooked portions 104 of the arms 102 causes the wheel and therefore the boss 12 and valve stem 10 to be moved upwardly. Continuous upward and downward movement of the valve stem in this way dislodges scale and other deposits and allows the valve stem to be rotated by means of the rotation inducing device, either during or after vibration.

The invention is not restricted to the details of the foregoing embodiments. For example, in the first, second and fourth embodiments, the jaws need not be clamped to the boss 12 by means of a clamping force applied as a result of impact from the vibration device. Instead, or in addition, the jaws may be urged into clamping engagement with the boss hydraulically, pneumatically, magnetically, electrically or by any other suitable means.

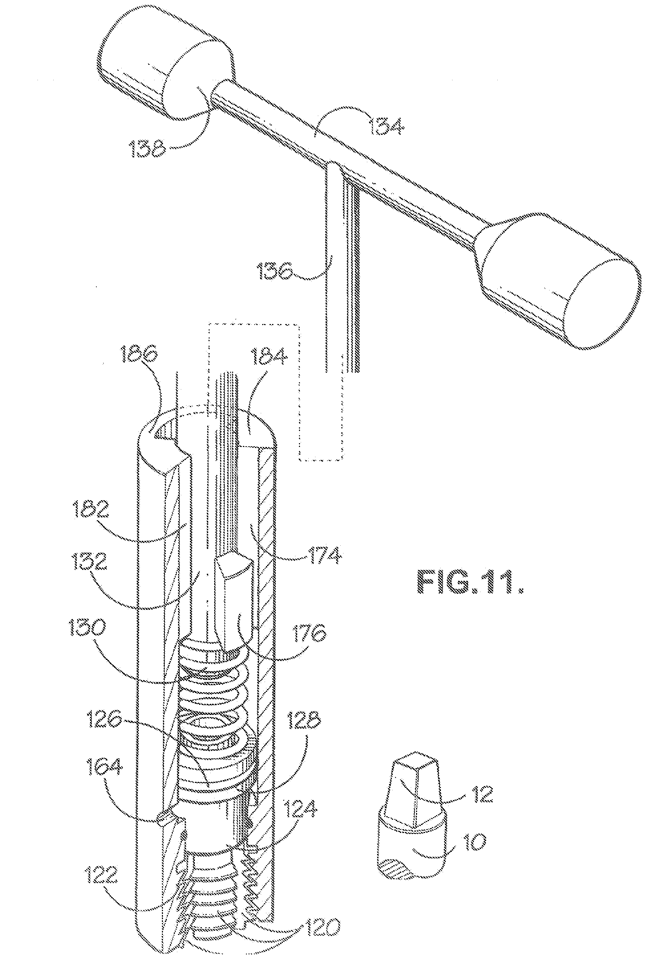

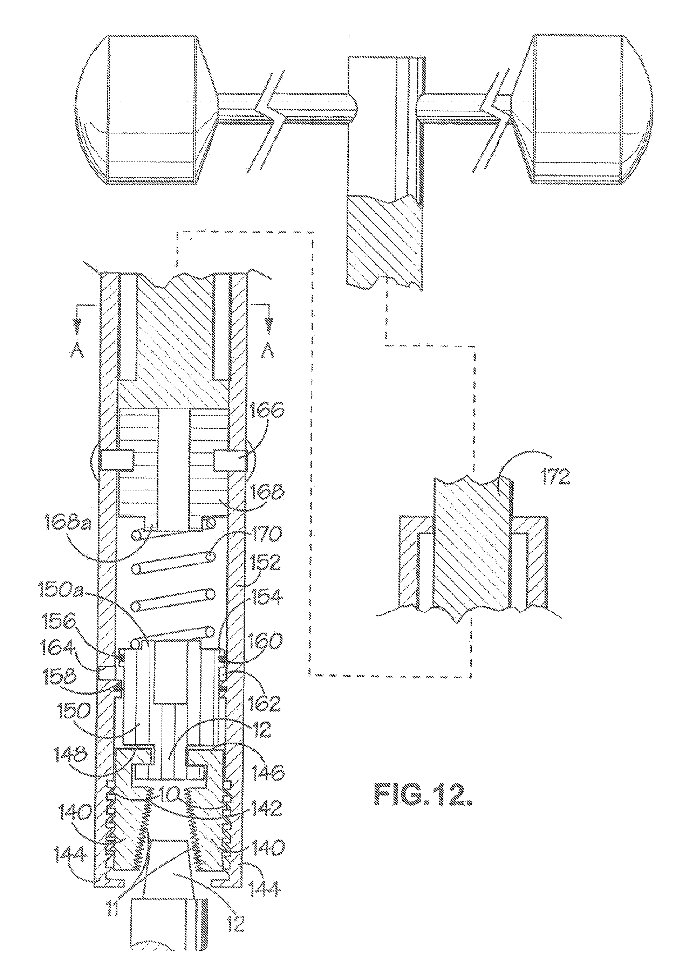

Referring next to Fig. 11, there is shown highly diagrammatically a fifth embodiment. This differs primarily from the earlier embodiments in that the longitudinally acting impact force is applied manually rather than by a powered vibration mechanism. Tapered jaw arrangement 120 at the lower end of the apparatus is adapted to firmly grip the tapered boss 12 on the end of the valve stem 10 as before, with a tapered interlocking retainer 122 holding the jaws in place, as described further hereinafter in connection with Fig. 12. The jaws are held on a jaw retainer 124 at the lower end of a piston assembly 126 which is itself part of a hydraulic actuator assembly 128. Above the hydraulic actuator assembly is a bi-directional torque transfer device 132 coupled to the hydraulic actuator assembly via a spring 130 and to a hand-bar 134 via a rotatable/reciprocable tubular jar 136. The hand-bar 134 carries a mass 138 that can be varied to suit the application.

For more details of the apparatus of Fig. 11, reference is now made to Figs. 12 and 13.

The tapered jaw arrangement 120 comprises four identical jaw members 140 corresponding to the four faces of the tapered boss 12 to be gripped. The inner faces 142 of the jaw members 140 are basically planar but taper inwards towards the upper ends of these members and carry teeth which are preferably upwardly directed as in the earlier embodiments. The radially outer surfaces of the jaw members 140 are arcuate and received within arcuate depending retainer members 144 of the tapered interlocking retainer 122. The outer faces of the jaw members 140 and the inner members of the depending retainer members 144 carry circumferential threads which act to assist in holding the jaw members in position relative to the container members 144. The upper ends of the jaw members are carried by a ring 146 which is trapped within an annular recess 148 in a piston member 150 of the piston assembly 126. The piston 150 is slidably received within a cylindrical housing 152 which carries at its lower end the jaw retainers 144. The piston member 150 has an outwardly projecting annular flange 154 at its upper end which is received in the housing 152 and carries a first o-ring seal 156. The cylinder has an inwardly projecting annular flange 158 which receives the piston 150 and carries a second o-ring seal 160. Between the flanges 154, 158 there is defined an annular chamber 162 to which hydraulic fluid can be selectively provided via an inlet bore 164. At a distance above the piston 150 in the cylinder 152 there is fixed to the cylinder by pins 166 an annular stop member 168. Between the stop member 168 and the piston 150 is a coil spring 170, the stop member and piston having respective, mutually engageable anvil portions 168a, 150a.

In use, by applying hydraulic fluid to the chamber 162, the piston can be raised within the cylinder 152, typically by about 1cm., to thereby raise the jaw members 140. Raising the jaw members causes them to move inwardly and grip the boss 12, the threads on the outer faces of the jaws cooperating with the threads on the inner faces of the retainers 144 to hold the jaws in position. By this means the tapered boss 12 is gripped rigidly relative to the cylinder 152. Removal of the oil pressure in chamber 162 enables the jaws to be released, this being assisted by the downward force of the spring 170 to give a quick-release action.

The cylinder 152 and the apparatus of Fig.12 described thus far are connected to an upwardly extending rod 172 via the bi-directional torque transfer device 132 shown best in Figs. 11 and 13. The lower end of the rod 172 carries a rod portion 174 of smaller diameter to the bottom end of which is attached/formed a paddle-like member 176 which in plan view has the profile shown in Fig. 13, having a first pair of radially extending faces 178a, 178b, which are angularly separated by 180° but are also coplanar. Fixed relative to the cylinder 152 are two segmental members 182, 184 defining pairs of angular spaced but coplanar faces 182a, 184a and 182b, 184b_ By this arrangement, the paddle part 176 can be moved, preferably by about 70°, between two extremes wherein the faces 180a and 182a, and the faces 180b, 184b are in engagement and wherein the faces 178a, 184a and 178b, 182b are in engagement respectively.

The upper end of the rod 172 carries the crossbar/handle bar 134 which itself carries a mass 138 which can be varied to suit the application.

It will be noted from Fig. 11 that the fixed members 182, 184 defining the faces 182a, 182b, 184a, 184b are elongate in the vertical direction and that the paddle member 176 can therefore be displaced vertically from its position shown in Fig. 11, in practice by several cms., whilst still transferring rotary torque from the rod 172 to the cylinder 152, in either rotational direction. It will also be appreciated that by alternating the direction of rotation of the rod 172, the cylinder 152 can be subjected to a plurality of alternating circumferential jolts/inpacts since the cylinder 152 is stationary in the time that the paddle member is being moved through the 70° where it is not in contact with either set of faces on the fixed members 182, 184. Furthermore, when the rod 152 is lifted to displace the paddle wheel up the members 182, 184, at the top of the stroke there is an impact of the paddle wheel with a retaining stop on the cylinder 152 in the region 186. On the other hand, when the rod is dropped freely from this upper position, by manual releasing of the crossbar 134, the paddle wheel 176 falls under the weight of the rod 172, the cross member 134 and mass 138 so as to impact on the stop 168 fixed to the cylinder 152. Thus by lifting and dropping the crossbar 134 and variable mass 138, the cylinder 152, and hence the valve spindle when rigidly gripped by the jaws, can be subjected to longitudinal impacts in opposite directions. Furthermore, by alternate clockwise and anti clockwise rotations of the rod 172 by the crossbar 134 (shown displaced by 90° in Fig. 12), the cylinder 152 and hence the boss 12 when gripped by the jaws, can be subjected to torque with alternating circumferential impacts.

From the aforegoing its will be appreciated that:
1) The jaws can grip tapered spindles of various sizes and enable the apparatus to pull upwards against the spindle.
2) The variable mass facilitates the controlled use of the angular momentum to deliver the torque with just the right amount that prevents the spindle from being broken.
3) By altering the shape of the jaw members, the apparatus can be modified easily to grip square spindles, round spindles or indeed spindles of any shape.
4) Upward facing serrations cut on the jaw face result in the grip being tightened as the top section is pulled upwards.
5) The mass is variable to deliver more (or less) angular momentum with which to control the impact force.
6) The tapered interlocking retainer serves to lock the jaws when they have been hydraulically engaged.
7) In still other embodiments, the jaws do not need to be engaged hydraulically but could be engaged pneumatically, electrically, mechanically or magnetically induced to engage.
8) In still further embodiments, the manual operation of the fifth embodiment could be achieved by a powered drive, such as an air motor or hydraulic motor.
9) The "paddle member" need not be of the shape illustrated provided it enables a means of breaking/taking up the rotary drive to the cylinder.

### THE FOLLOWING STATEMENTS DESCRIBE VARIOUS EMBODIMENTS OF THE INVENTION

1. Apparatus for freeing a seized valve having an elongate valve actuating stem projecting out of the valve, comprising means for enabling the repeated application of an impact force to the valve actuating stem along its longitudinal axis.
2. Apparatus as claimed in statement 1, comprising means for enabling the application of the impact force to the valve actuating stem alternately in opposite directions along its longitudinal axis.
3. Apparatus as claimed in statement 2, comprising gripping means for gripping and engaging with a projecting portion of the valve actuating stem.
4. Apparatus as claimed in statement 3, wherein the gripping means comprises a plurality of jaws.
5. Apparatus as claimed in statement 3 or statement 4, wherein the gripping means is arranged to grip and engage a projecting portion of the valve actuating stem when an impact force is applied in a first direction to allow an impact force to be applied by the gripping means to the projecting portion of the valve actuating stem in the opposite direction.
6. Apparatus as claimed in statement 5, wherein the jaws comprise means for enhancing the engagement of the jaws with the projecting portion of the valve actuating stem.
7. Apparatus as claimed in statement 6, wherein the means for enhancing engagement of the jaws comprises a plurality of teeth members.
8. Apparatus as claimed in statement 7, wherein the teeth members are elongate.
9. Apparatus as claimed in statement 8, wherein the elongate teeth members are aligned substantially perpendicularly to the longitudinal axis of the valve actuating stem.
10. Apparatus as claimed in any of statements 5 to 9, comprising a base portion to which the impact force is applied and wherein the gripping means is movable with respect to the base portion in the direction of application of the impact force, the base portion urging the gripping means into engagement with the projecting valve actuating stem upon application of the impact force.
11. Apparatus as claimed in statement 10, comprising camming surfaces on the base portion and on the gripping means for urging the gripping means into engagement with the projecting valve actuating stem upon relative movement of the base portion and the gripping means.
12. Apparatus as claimed in statement 10 or statement 11, wherein the base portion urges the gripping means into engagement with the projecting valve actuating stem upon application of an impact force in one direction.
13. Apparatus as claimed in statement 12, wherein the base portion urges the gripping means into engagement with the projecting valve actuating stem upon application of an impact force towards the stem.
14. Apparatus as claimed in statement 13, wherein the base portion comprises a shank to which the impact force is applied and the gripping means comprises a collar which is slidably disposed on the shank and opposed jaws for engaging opposite sides of a projecting valve actuating stem, the base portion and the opposed jaws comprising camming surfaces for urging the jaws in a gripping direction.
15. Apparatus as maimed in statement 12, wherein the base portion urges the gripping means into engagement with the projecting valve actuating stem upon application of an impact force away from the stem.
16. Apparatus as claimed in statement 15, wherein the impact force is applied to the base portion and the gripping means comprises opposed jaws for engaging opposite sides of a projecting valve actuating stem, the base portion and the opposed jaws comprising camming surfaces for urging the jaws in a gripping direction.
17. Apparatus as claimed in statement 3, comprising a socket for engagement with the projecting portion of the valve actuating stem and means for securing the socket to the projecting portion.
18. Apparatus as claimed in statement 17, comprising a retaining member insertable into aligned apertures in the socket and the projecting portion.
19. Apparatus as claimed in statement 18, wherein the socket comprises aligned apertures in opposed portions and wherein the retaining member passes through one aperture in the socket, through the aligned aperture in the projecting portion and through the further aligned aperture in the socket.
20. Apparatus as claimed in statement 18 or statement 19, wherein the retaining member comprises a retaining pin.
21. Apparatus as claimed in statement 2, comprising engagement means for engaging a handwheel connected to a valve actuating stem.
22. Apparatus as claimed in statement 21, wherein the engagement means comprise hook means for hooking under a portion of the handwheel.
23. Apparatus as claimed in statement 22, wherein the hook means is connected to a portion to which the impact force is applied.
24. Apparatus as claimed in statement 3 or 4, inducing means enabling the closed jaws, when gripping the valve actuating stem, to be subjected to impact forces in a rotational direction relative to the longitudinal direction of the valve stem.
25. Apparatus as claimed in statement 24, wherein the impact forces in the rotational direction are established by means of a rotary member which can be angularly displaced in opposite directions between engagement with stop members fixed relative to the gripping means.
26. Apparatus as claimed in statement 25, wherein the angular displacement of the rotary member is achievable manually or by means of a powered drive.
27. Apparatus as claimed in statement 25 or 26, wherein said rotary member is displaceable longitudinally relative to said stop members whilst remaining engageable therewith, there being provided to define the extremes of the longitudinal movement of the rotary member respective stop members, engagement of the rotary member with said stop members providing said impact forces along the longitudinal axis of the valve stem.
28. Apparatus as claimed in statement 25, 26 or 27 wherein said rotary member is coupled to a mass which can be varied to suit the application.
29. A method of freeing a seized valve having an elongate valve actuating stem projecting out of the valve, comprising repeatedly applying an impact force to the valve actuating stem along its long its longitudinal axis.
30. A method as claimed in statement 24, comprising applying the impact force to the valve actuating stem alternately in opposite directions along its longitudinal axis.
31. A method as claimed in statement 24 or statement 25, further comprising application of a torque to the valve actuating stem.
32. A method as claimed in statement 26, wherein the torque is applied simultaneously with the application of the impact force.
33. A method as claimed in statement 26, wherein the torque is applied after the repeated application of the impact force.
34. A method as claimed in statement 29, wherein the valve is subjected also to repeated torsional impacts in opposite rotational directions.

## Claims

1. Apparatus for freeing a seized valve having an elongate valve actuating stem projecting out of the valve, comprising gripping means for gripping and engaging with a projecting portion of the valve actuating stem and means enabling the gripping means, when gripping the valve actuating stem, to be subjected to impact forces in a rotational direction relative to the longitudinal direction of the valve stem.

2. Apparatus as claimed in claim 1, comprising means for enabling the repeated application of an impact force to the valve actuating stem alternately in opposite directions along its longitudinal axis.

3. Apparatus as claimed in claim 2, wherein the gripping means is arranged to grip and engage a projecting portion of the valve actuating stem when an impact force is applied in a first direction to allow an impact force to be applied by the gripping means to the projecting portion of the valve actuating stem in the opposite direction.

4. Apparatus as claimed in any of dams 1 to 3, wherein the gripping means comprises a plurality of jaws and, optionally,
wherein the jaws comprise means for enhancing the engagement of the jaws with the projecting portion of the valve actuating stem and, optionally,
wherein the means for enhancing engagement of the jaws comprises a plurality of teeth members and, optionally,
wherein the teeth members are elongate and, optionally,
wherein the elongate teeth members are aligned substantially perpendicularly to the longitudinal axis of the valve actuating stem.

5. Apparatus as claimed in any of the preceding claims, wherein the impact forces in the rotational direction are established by means of a rotary member which can be angularly displaced in opposite directions between engagement with stop members fixed relative to the gripping means.

6. Apparatus as claimed in claim 5, wherein the rotary member comprises a rod having a radially projecting portion which is engageable with the stop members.

7. Apparatus as claimed in claim 5 or claim 6, wherein the rotary member comprises a plurality of radially projecting portions, each engageable with respective stop members.

8. Apparatus as claimed in any of claims 5 to 7, wherein the stop members comprise abutment faces.

9. Apparatus as claimed in claim 6, further comprising an elongate tube member on which the gripping means and the stop members are mounted, the rotary member being rotatably mounted with respect to the tube member.

10. Apparatus as claimed in any of claims 5 to 9, wherein the angular displacement of the rotary member is achievable manually or by means of a powered drive.

11. Apparatus as claimed in any of claims 5 to 10, wherein said rotary member is displaceable longitudinally relative to said stop members whilst remaining engageable therewith, there being provided to define the extremes of the longitudinal movement of the rotary member respective stop members, engagement of the rotary member with said stop members providing said impact forces along the longitudinal axis of the valve stem.

12. Apparatus as claimed in any of claims 5 to 11, wherein said rotary member is coupled to a mass which can be varied to suit the application.

13. A method of freeing a seized valve having an elongate valve actuating stem projecting out of the valve, comprising gripping and engaging a projecting portion of the valve actuating stem and subjecting the gripping means, when gripping the valve actuating stem, to impact forces in a rotational direction relative to the longitudinal direction of the valve stem.

14. A method as claimed in claim 13, further comprising repeatedly applying an impact force to the valve actuating stem alternately in opposite directions along its longitudinal axis and, optionally,
wherein the impact forces in the rotational direction are applied simultaneously with the application of the impact force in the longitudinal direction and, optionally,
wherein the impact forces in the rotational direction are applied after the repeated application of the impact force in the longitudinal direction.

15. A method as claimed in claim 13 or claim 14, wherein the impact forces in the rotational direction are repeatedly applied alternately in opposite rotational directions.
